Europäisches Patentamt

European Patent Office

Office européen des brevets

(19)

(11) Numéro de publication : **0 074 901**
**B1**

# (12) FASCICULE DE BREVET EUROPÉEN

(45) Date de publication du fascicule du brevet :
**21.11.85**

(21) Numéro de dépôt : **82401651.3**

(22) Date de dépôt : **10.09.82**

(51) Int. Cl.⁴ : **G 03 B 21/32, G 11 B 15/66**

(54) **Dérouleur de bande et lecteur de bande comprenant un tel dérouleur.**

(30) Priorité : **11.09.81 FR 8117234**

(43) Date de publication de la demande :
**23.03.83 Bulletin 83/12**

(45) Mention de la délivrance du brevet :
**21.11.85 Bulletin 85/47**

(84) Etats contractants désignés :
**DE GB IT SE**

(56) Documents cités :
**FR-A- 1 044 194**
**US-A- 3 025 011**

(73) Titulaire : **THOMSON-CSF**
**173, Boulevard Haussmann**
**F-75379 Paris Cedex 08 (FR)**

(72) Inventeur : **Ledun, Michel**
**THOMSON-CSF SCPI 173, bld Haussmann**
**F-75379 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

EP 0 074 901 B1

Description

L'invention concerne un dérouleur de bande et son application à un lecteur de bande.

Un dérouleur de bande est un dispositif permettant de transférer une bande enroulée dans une bobine magasin vers une bobine réceptrice et vice versa. Le plus généralement, la bande constitue un support d'information sur lequel des données de nature analogique ou numérique peuvent être enregistrées, lues et éventuellement effacées. On connaît de telles bandes support d'information, par exemple : les films photographiques, les bandes magnétiques, les rubans perforables, etc... Selon l'application qui est faite du dérouleur de bande, le mouvement de la bande doit être continu, intermittent ou encore saccadé comme dans la technique cinématographique, de plus, dans certaines applications, le dérouleur de bande doit opérer dans les deux sens de défilement, ou tout au moins avoir la capacité de rebobiner la bande dans la bobine magasin.

Il est connu par le brevet US-A-3 025 011 un dispositif dérouleur de bande magnétique dans lequel la bobine réceptrice comporte un montage pour coupler mécaniquement l'amorce de la bande stockée sur la bobine dévideuse. Ce montage est constitué d'un morceau de bande non enregistré solidaire par une extrémité de la bobine réceptrice et dont l'autre extrémité se termine par un crochet qui fait toute la largeur de la bande. La bande enregistrée est elle-même terminée vers la périphérie de la bobine dévideuse par un bout non enregistré qui sert à la fois de protection et d'amorce pour se terminer par son extrémité libre également par un crochet destiné lors de la rotation à venir s'accrocher avec celui de la bobine réceptrice.

Les dérouleurs de bande mis en œuvre dans les appareils de projection cinématographiques peuvent être répartis en deux types ; ceux à insertion latérale destinés principalement aux films 35 mm et ceux à insertion dite automatique pour les films 8 mm ou super 8. Dans le premier type, l'opérateur, après avoir placé la bobine magasin, appelée aussi bobine dévideuse, et après avoir ouvert une porte latérale, insère l'amorce du film entre les rouleaux et galets de guidage. Il accroche ensuite cette amorce sur le mandrin de la bobine réceptrice. Cette opération s'avère longue et complexe.

Dans le deuxième type d'appareil, l'opérateur insère l'amorce du film dans une fente, les perforations du film s'engrènent sur une roue dentée qui entraîne l'amorce suivant un circuit déterminé.

Cette amorce s'accroche sur la bobine réceptrice par coincement des flasques latéraux puis par frottement des spires successives entre elles. En pratique il s'ensuit très souvent un risque de détérioration de l'amorce du film et parfois du film lui-même par suite du glissement intempestif et du mauvais engrènement de l'amorce lors de son insertion manuelle. De plus ce type d'appareil exige des films relativement rigides.

Suivant une solution décrite dans la publication de brevet FR-A-1 044 194 le dispositif de fixation de film utilise également un morceau de bande solidaire d'une bobine réceptrice et dont l'autre extrémité est aménagée pour recevoir et accrocher l'amorce du film. Cet aménagement est constitué de saillies destinées à venir se loger directement dans les perforations latérales du film.

Un lecteur de bande est un appareil qui permet de lire, ou encore d'analyser les données d'information enregistrées sur un support enroulé sur une bobine. Il existe différents types de lecteur de bande et, notamment, des lecteurs de bande de film photographique sur laquelle les données sont enregistrées sous la forme d'images contiguës qui sont analysées selon un balayage télévision pour être visualisées sur la face d'un tube à rayons cathodiques.

La technique d'analyse la plus courante est celle dite du « flying spot » dans laquelle un pinceau lumineux extrêmement fin balaye la surface du film ; la lumière traversant le film est captée par une cellule photoélectrique, dans le cas d'images monochromes, ou après séparation des composantes fondamentales de la lumière par une pluralité de cellules photoélectriques dans le cas des images polychromes.

Contrairement aux appareils de projection cinématographique où la bande de film défile par saccade, dans les appareils de lecture de bande d'images, tels que les appareils de télécinéma, la bande avance régulièrement avec une vitesse de défilement parfaitement définie, ce qui simplifie notablement l'appareil sur le plan électronique, par comparaison aux caméras de prise de vue, mais reporte la difficulté sur le plan mécanique. Il est, en effet, nécessaire de dérouler la bande de façon précise et de modifier le déplacement du faisceau lumineux afin de compenser le mouvement propre du film. La précision exigée est difficile à obtenir compte tenu des tolérances mécaniques de fabrication du film, des détériorations possibles des perforations latérales d'entraînement, des phénomènes de collage et du retrait introduit par les variations de température et du degré hygrométrique de l'air.

Un autre type de lecteur de bande se rapporte à la technique de la navigation, notamment de la navigation aérienne. Dans ce type de lecteur de bande, la bande est un support d'information, généralement un film photographique, sur lequel sont enregistrées des images rangées dans un ordre prédéterminé ; ces images correspondent à des cartes des régions susceptibles d'être survolées. Le déroulement du film est synchrone de la composante de vitesse de l'avion, selon l'une des deux coordonnées de la carte et le pinceau lumineux du dispositif de lecture du film analyse seulement une partie de l'image et est déplacée transversalement en synchronisme avec la vitesse de l'avion selon l'autre coordonnée de la carte, et, des moyens appropriés permettent de présenter, dans le couloir de lecture de l'appareil, la partie du film correspondant à la position géographique de l'avion. Ce lecteur de bande est associé à un indicateur cartographique à tube à rayons cathodiques. Dans ce type de lecteur de bande, la bande du film est de grand format et une grande quantité de données d'information sont enregistrées ; la position des images dans le couloir de lecture doit être connue avec une grande précision ; le déroulement de la bande doit pouvoir s'opérer dans les deux sens ; la bande de film doit pouvoir être changée à volonté, et l'insertion de l'amorce du film doit s'effectuer automatiquement.

D'autres types d'appareils incorporent des dérouleurs de bande, ce sont notamment les enregistreurs sur bande support d'information utilisés dans les senseurs optiques à balayage de ligne, les équipements radar à faisceau latéral, les équipements sonar, etc...

On voit qu'il existe une forte demande pour des dispositifs permettant de dérouler une bande sur laquelle est stockée une grande quantité d'informations, c'est-à-dire une bande de longueur et de largeur importantes et capable d'enregistrer une grande quantité d'informations par unité de surface. Il s'en suit, d'une part, que pour réaliser des bobines de faible encombrement, la bande doit être de faible épaisseur, d'où une plus grande fragilité et des difficultés d'insertion dans l'appareil et, d'autre part, la densité élevée d'information implique de réaliser un guidage précis de la bande, de minimiser les jeux mécaniques et de mesurer la position de la bande dans le couloir de lecture avec une faible erreur. De plus, il est souhaitable que la bande soit introduite de façon automatique sur les rouleaux de guidage, dans le couloir de lecture et sur la bobine réceptrice.

Pour satisfaire les exigences énumérées ci-dessus, un dispositif, selon l'invention, comprend les caractéristiques de la revendication 1.

Un tel dérouleur de bande trouve son application dans un appareil permettant de lire les données d'information enregistrées sur une bande. Le lecteur de bande, selon l'invention, comprend les caractéristiques de la revendication 8. Un tel appareil comprend un chargeur de bande comprenant un boîtier muni d'un moyen de positionnement de l'amorce de la bande ; l'amorce de la bande est accouplée automatiquement à une bretelle d'entraînement solidaire de la bobine réceptrice ; l'appareil comprend, en outre, des moyens de guidage latéral de la bande dans le couloir de lecture et des moyens de mesure de la position longitudinale de la bande dans ce couloir de lecture.

D'autres particularités et avantages de la présente invention ressortiront de la description qui va suivre, faite en regard des dessins annexés et donnant, à titre explicatif et nullement limitatif, un mode de réalisation d'un dérouleur de bande et d'un lecteur de bande incorporant un tel dérouleur de bande.

Sur ces dessins :

La figure 1 représente, sous la forme d'un schéma mécanique simplifié, un dérouleur de bande conforme à l'invention.

La figure 2a représente, selon une vue latérale, la bobine dévideuse et le moyen de positionnement de l'amorce de la bande.

La figure 2b représente, selon une vue transversale, la bobine dévideuse et le moyen de positionnement de l'amorce de la bande.

La figure 3 représente une forme de réalisation des moyens d'accouplement de l'amorce de la bande avec l'extrémité libre de la bretelle d'entraînement de la bande.

La figure 4 représente une forme de réalisation des moyens d'accouplement de l'extrémité libre de la bretelle d'entraînement de la bande avec l'amorce de la bande.

La figure 5 représente une forme de réalisation des boutons d'accouplement disposés sur l'amorce de la bande.

La figure 6 représente un mode de réalisation des boutonnières d'accouplement disposées sur l'extrémité libre de la bretelle d'entraînement de la bande.

La figure 7 représente, selon une vue en coupe, l'organe mécanique permettant d'accoupler et de désaccoupler l'amorce de la bande de l'extrémité libre de la bretelle d'entraînement de la bande.

La figure 8a représente, selon une vue latérale, un chargeur de bande ;

La figure 8b représente, selon une vue transversale, le chargeur de bande de la figure 8a.

La figure 8c représente, selon une vue en coupe, les pieds de positionnement de l'amorce de la bande du chargeur de bande de la figure 8a.

La figure 8d représente, selon une vue en coupe latérale, le chargeur de bande de la figure 8a.

La figure 8e représente, selon une vue en coupe transversale, le chargeur de bande de la figure 8a.

La figure 9a représente, selon une coupe latérale, un lecteur de bande conforme à l'invention.

La figure 9b représente, selon une vue transversale arrière, le lecteur de bande de la figure 9a.

La figure 9c représente, selon une vue en coupe, les rouleaux de guidage de la bande.

La figure 10a représente, selon une vue en coupe transversale, l'organe mécanique d'accouplement et de désaccouplement de l'amorce de la bande.

La figure 10b représente, selon une vue en coupe latérale, l'organe mécanique de la figure 10a.

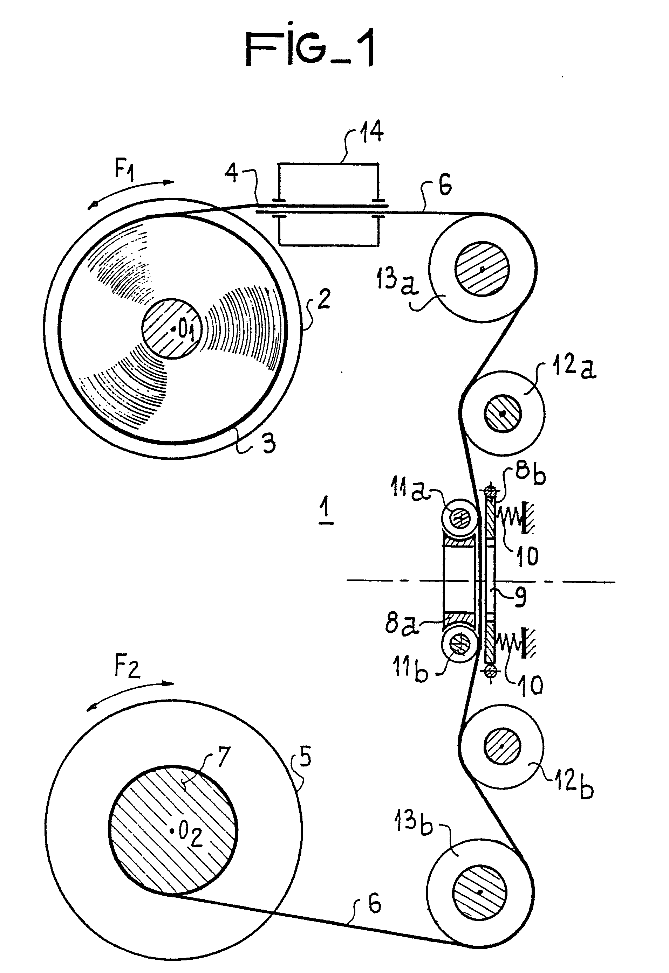

La figure 1 représente, sous la forme d'un schéma mécanique simplifié, un dérouleur de bande conforme à l'invention ; ce dispositif 1 comprend les éléments essentiels suivants :

deux bobines, situées avantageusement dans un même plan : une bobine magasin 2, ou bobine dévideuse, sur laquelle est enroulée la bande 3, ou support d'information, l'amorce 4 de cette bande étant accessible en dehors de la bobine, et une bobine réceptrice 5 munie d'une bretelle 6 d'entraînement de la bande 3 à dérouler, l'une des extrémités de cette bretelle est rigidement attachée au mandrin 7, tandis que l'autre extrémité, après insertion à travers les mécanismes du dispositif, est placée en regard de l'extrémité de l'amorce 4 de la bande. La bobine dévideuse est d'un type amovible et libre de tourner, dans les deux sens, autour de son axe $O_1$, comme indiqué par la double flèche $F_1$ ; la bobine réceptrice est libre de tourner dans les deux sens, autour de son axe $O_2$, comme indiqué par la double flèche $F_2$ ;

un presse-film comprenant un élément fixe 8a disposé en regard d'un élément mobile transversalement 8b pour créer un couloir et une fenêtre 9 de lecture du film, cet élément mobile étant maintenu en pression contre le film par un jeu de ressorts 10 ;

une paire de galets 11a et 11b disposés de part et d'autre du presse-film ;

un premier jeu de rouleaux 12a et 12b destinés au guidage longitudinal et transversal de la bande ;

et un second jeu de rouleaux 13a et 13b disposés à la hauteur de chacune des deux bobines, dans le but de renvoyer le film et de maintenir constant l'arc de contact de la bande sur le premier jeu de rouleaux, indépendamment des quantités de film enroulées sur ces bobines.

L'amorce 4 de la bande de film et l'extrémité libre de la bretelle d'entraînement 6 sont munies de moyens d'accouplement permettant de les solidariser, lorsque ces deux éléments sont placés en regard l'un de l'autre. Dans le but d'automatiser l'opération d'accouplement de l'amorce de la bande avec la bretelle d'entraînement, le dispositif comprend, en outre, un mécanisme d'accouplement 14 qui sera décrit en détail ultérieurement.

La bobine dévideuse 2 et la bobine réceptrice 5 sont accouplées à des moyens de rotation non représentés sur cette figure. Lorsque la bande 3 est un film cinématographique classique muni d'un jeu de perforations latérales, l'un des rouleaux de guidage 12a, 12b peut comporter des dents qui s'engagent dans les perforations et entraînent ce rouleau en synchronisme avec le déroulement de la bande. Un transducteur de position angulaire non représenté, physiquement couplé à ce rouleau de guidage peut fournir un signal représentatif de la position de la bande dans le couloir de lecture.

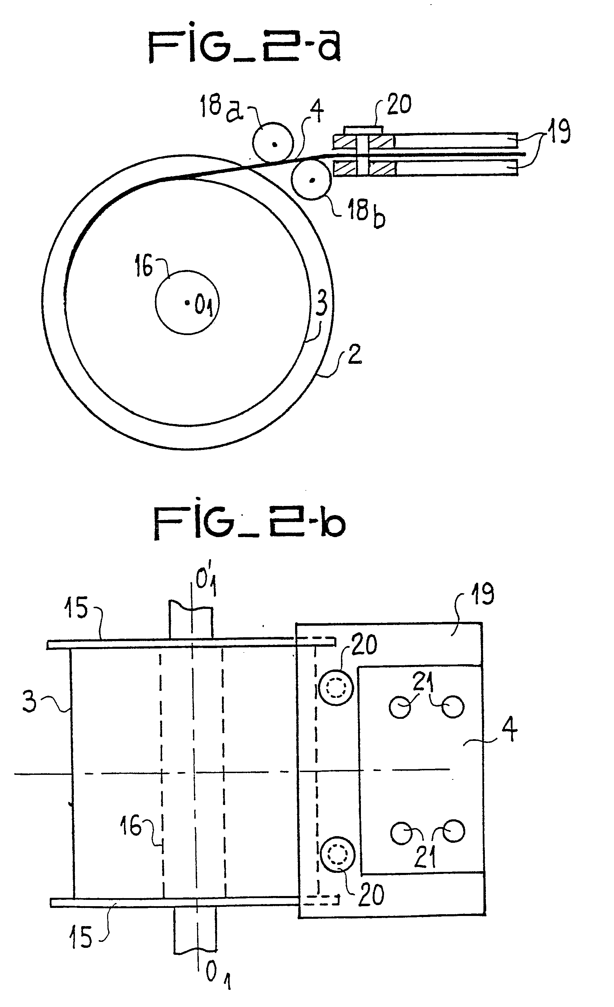

Les figures 2a et 2b représentent, sous une forme simplifiée, respectivement selon une vue latérale et une vue transversale, des détails de réalisation de la bobine dévideuse 2 et des moyens de positionnement de l'amorce 4 de la bande 3. La bobine dévideuse est une bobine classique comprenant une paire de flasques 15 solidaires d'un mandrin 16 d'axe $O_1$-$O'_1$. La bande, lors de son déroulement, peut être guidée par un jeu de rouleaux 18a et 18b, solidaires mécaniquement d'un bâti qui supporte la bobine dévideuse et, éventuellement, le moyen de mise en rotation de cette bobine sur le mandrin 16. Ce bâti supporte également un élément de guidage 19 comportant des pieds de positionnement 20 de l'amorce 4 de la bande, ces pieds pouvant occuper deux positions stables : une position basse, comme représentée, selon laquelle les pieds traversent cette amorce et positionnent celle-ci dans l'élément de guidage 19, et une position haute lorsque l'extrémité libre de la bretelle et l'amorce de la bande ont été accouplées. La figure 2b montre que l'amorce 4 de la bande est équipée d'un jeu de boutons 21 qui sont destinés à être insérés dans des réceptacles correspondants prévus sur l'extrémité libre de la bretelle 6 de la bobine réceptrice 5.

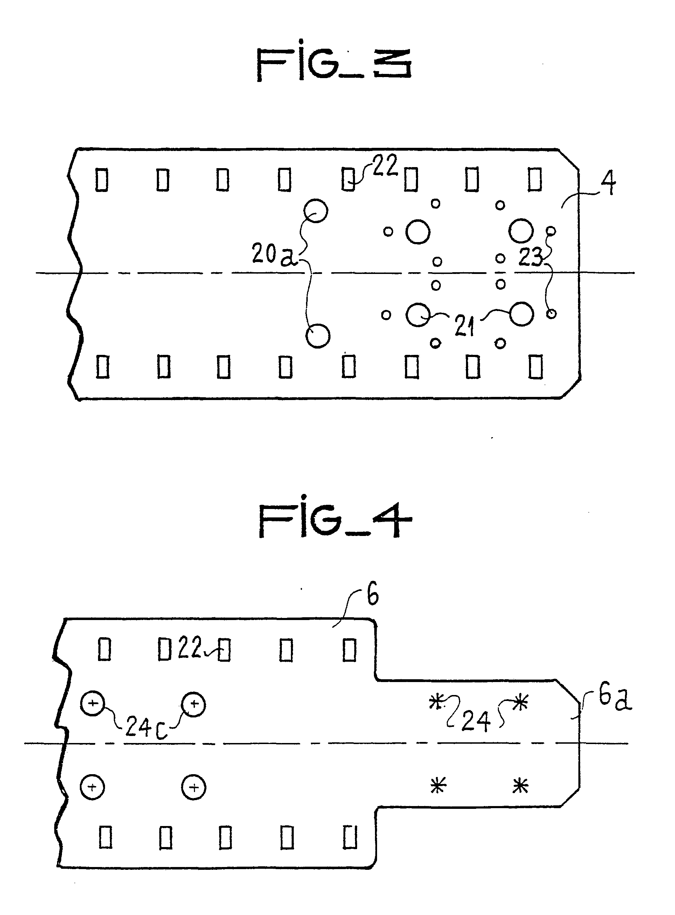

La figure 3 représente la disposition des moyens d'accouplement de l'amorce 4 de la bande 3 avec la bretelle d'entraînement 6. Cette bande est, par exemple, un film photographique classique, muni de ses perforations latérales 22. L'amorce du film est munie d'un jeu de boutons 21 convenablement répartis et cette amorce comporte des perforations circulaires 20a destinées à recevoir les pieds de positionnement 20 représentés sur les figures 2a et 2b. Selon une variante de réalisation, les pieds de positionnement sont de section rectangulaire et disposées en regard des perforations latérales 22. L'amorce de bande comprend également des séries de perforations circulaires 23, chaque série étant disposée régulièrement autour de chacun des boutons 21 ; la fonction de ces perforations circulaires 23 est de permettre le libre passage de doigts destinés à désolidariser les boutons d'accouplement 21 des réceptacles correspondants situés sur l'extrémité libre de la bretelle d'entraînement 6.

La figure 4 représente la disposition des moyens d'accouplement de la bretelle d'entraînement 6 avec l'amorce 4 de la bande représentée sur la figure 3. La largeur de la bretelle d'entraînement 6 est égale à celle de la bande et est munie également de perforations latérales 22. La partie extrême 6a de la bretelle est de largeur réduite afin de s'emboîter dans la partie correspondante de l'élément de guidage 19 représenté sur la figure 2b. Cette partie extrême 6a de la bretelle d'entraînement est munie d'un jeu de boutonnières 24 correspondant aux boutons 21 situés sur l'amorce de la bande. La bretelle d'entraînement 6 peut être réalisée en un matériau identique à celui de la bande 3 ou en un matériau différent, par exemple, un métal flexible tel que le cuivre au beryllium après traitement thermique.

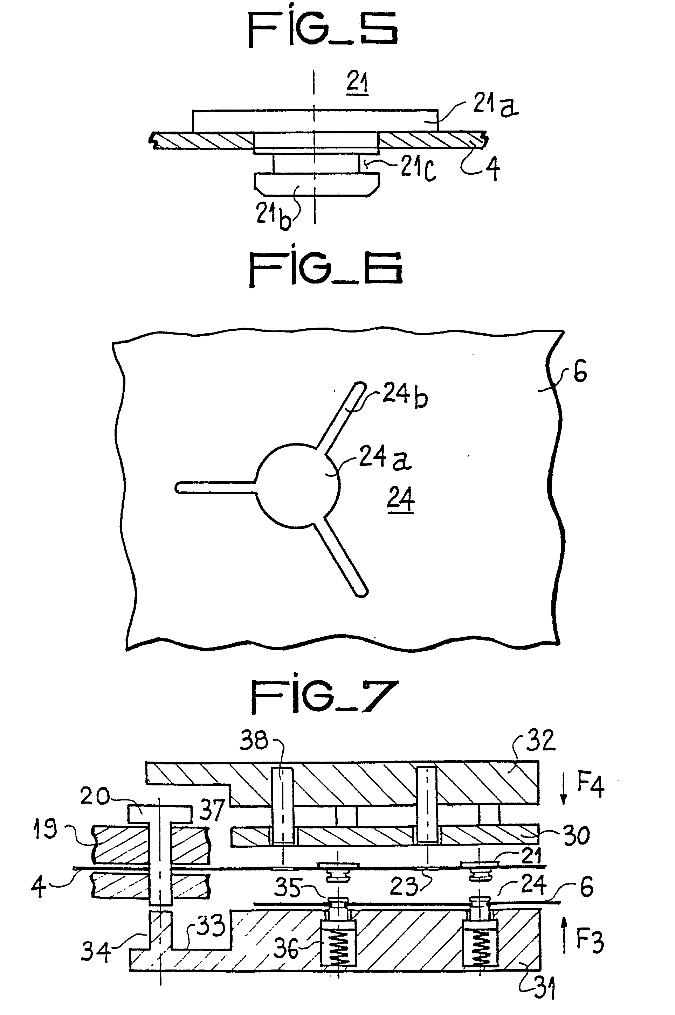

La figure 5 représente une forme de réalisation des boutons d'accouplement 21 situés sur l'amorce 4 de la bande. Un bouton comprend une tête 21a de faible épaisseur et un pied 21b, ce pied comportant une gorge circulaire 21c destinée à s'engager dans une boutonnière 24 située sur l'extrémité libre de la bretelle d'entraînement 6. Ces boutons d'accouplement 21 peuvent être maintenus par collage sur l'amorce de la bande. Selon une variante de réalisation, un bouton peut être formé de deux éléments sertis sur l'amorce de la bande.

La figure 6 représente une forme de réalisation des boutonnières 24 situées sur l'extrémité libre de la bretelle d'entraînement. Une boutonnière est formée par une perforation circulaire 24a pratiquée dans la bretelle ; le diamètre de cette perforation circulaire étant sensiblement égal au diamètre intérieur de la gorge 21c du bouton 21. Pour conférer une certaine élasticité à cette boutonnière et permettre sa mise en place dans la gorge 21a, des perforations linéaires 24b sont disposées autour de la perforation circulaire 24a, par exemple trois fentes comme représenté. Selon une variante de réalisation, ces boutonnières pourraient être des boutons-pressions du type femelle.

La figure 7 représente, selon une vue en coupe, l'organe mécanique 14 permettant d'accoupler et de désaccoupler l'amorce de la bande de l'extrémité libre de la bretelle d'entraînement ; cet organe 14 comprend les éléments suivants :

un plateau fixe 30, solidaire du bâti du dérouleur, et positionné en regard des boutons 21 insérés dans l'amorce 4 de la bande et à l'intérieur de la pièce de guidage 19 représentée partiellement ;

un premier plateau mobile 31, ou plateau d'accouplement, situé en regard du plateau fixe 30 et recevant à l'extrémité libre de la bretelle d'entraînement 6 ; le mouvement de ce premier plateau mobile est indiqué par la flèche F3 ;

un second plateau mobile 32, ou plateau de désaccouplement, situé en regard du/et adjacent au plateau fixe 30 ; le mouvement de ce second plateau est indiqué par la flèche $F_4$.

Le premier plateau mobile 31 comporte un dégagement 33 situé en regard du pied de positionnement 20, ce dégagement étant muni d'un pion 34 destiné à repousser ce pied de positionnement vers le haut de la figure lors de l'opération d'accouplement de l'amorce 4 de la bande avec la bretelle 6. Le premier plateau mobile est muni d'un jeu de boutons coulissants 35 montés de façon élastique sur ressorts dans des logements 36, la fonction de ces boutons étant de maintenir en place l'extrémité libre de la bretelle d'entraînement lorsque l'amorce 4 de la bande est désaccouplée et donc solidaire du chargeur de bande.

Le second plateau mobile 32 comporte également un dégagement 37 situé en regard du pied de positionnement 20, dans le but de repousser ce pied de positionnement vers le bas de la figure lors de l'opération de désaccouplement de l'amorce 4 avec la bretelle 6. Ce second plateau mobile est muni d'une série de doigts 38 situés en regard des perforations 23, dans le but d'appuyer sur l'amorce et de désaccoupler les boutonnières 24 des boutons 21. Ces deux plateaux mobiles 31 et 32 sont maintenus au repos éloignés du plateau fixe 30 par des moyens élastiques non représentés.

L'amorce 4 de la bande étant positionnée correctement à l'intérieur du plateau 30, par l'intermédiaire du pied de positionnement 20 et les réceptacles 24 de la bretelle 6 étant accrochés dans les boutons 35, le mouvement du premier plateau mobile 31 vers le plateau fixe 30 permet l'accrochage de la bretelle 6 sur les boutons 21 et libère les pieds de positionnement 20. Inversement, le déplacement du second plateau mobile, par le jeu des doigts 38, désaccouple les boutons 21, transfère la bretelle sur les boutons 35 et réengage les pieds de positionnement 20 dans l'amorce 4 de la bande. Les déplacements des plateaux 31 et 32 peuvent être effectués manuellement ou mécaniquement, à l'aide d'électroaimants par exemple.

Dans ce qui suit, on décrira un lecteur de bande comprenant un dérouleur de bande conforme à l'invention ; ce dérouleur de bande comprenant des moyens de déroulement et de positionnement de la bande et un ensemble optronique permettant d'analyser la partie de la bande traversant le couloir de lecture. Ce lecteur de bande est plus spécifiquement conçu pour une application à un système de navigation à partir de données géographiques enregistrées sur une bande de film.

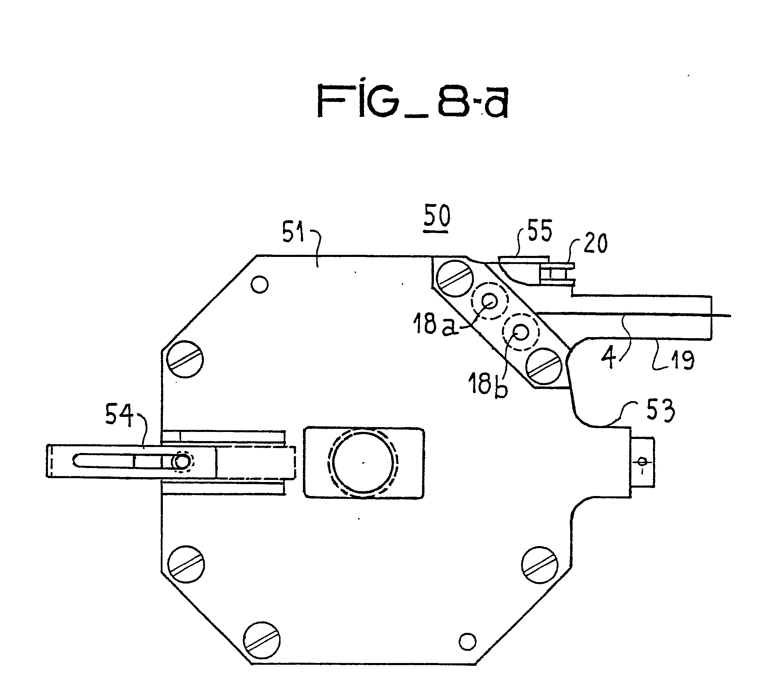

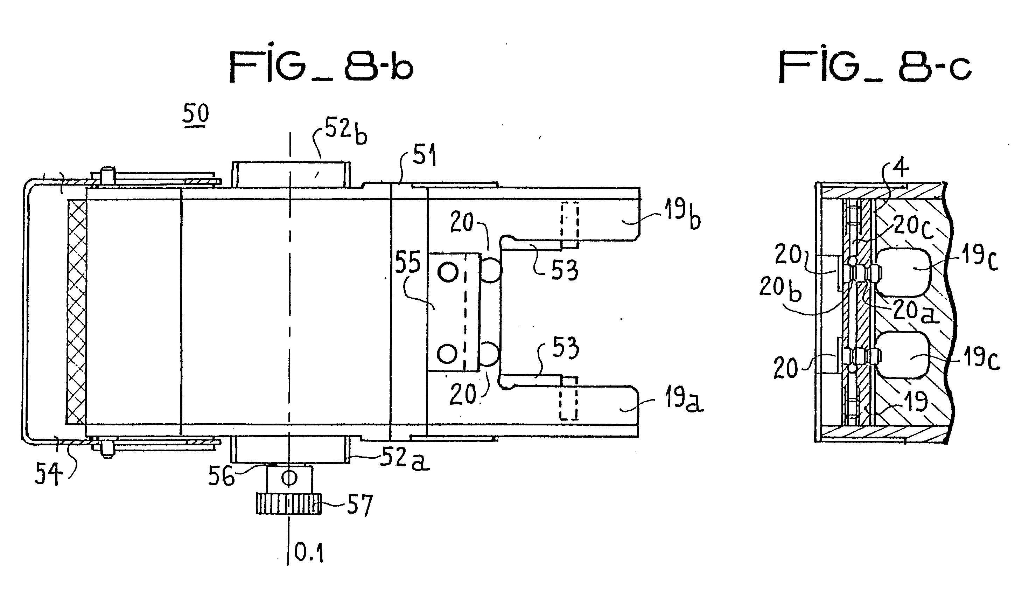

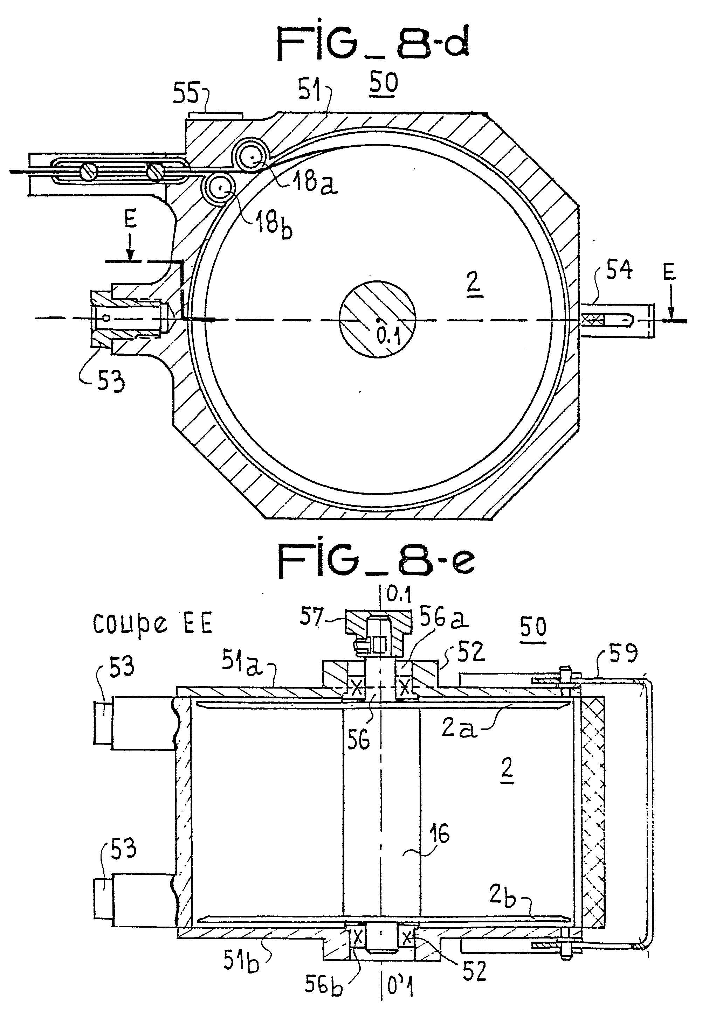

La figure 8a représente, selon une vue latérale, une forme de réalisation d'un chargeur de film 50 ; ce chargeur de film comporte un boîtier 51 à l'intérieur duquel est disposée une bobine dévideuse sur laquelle est enroulée la bande de film 3 à analyser. Le boîtier 51 est muni de moyens d'enfichage 52 dans le lecteur de bande. Le positionnement du chargeur 50 dans le dérouleur de bande est réalisé par le guide 52 et les centreurs à butées 53 ; une poignée rétractable 54 permet son insertion ou son extraction. L'amorce 4 de la bande de film est guidée et positionnée par les guides latéraux 19. Le boîtier comporte, en outre, des pieds de positionnement 20 de l'amorce du film, une butée d'arrêt 55 des pieds de positionnement et, enfin, des galets de guidage 18a et 18b du film.

La figure 8b représente une vue transversale du chargeur 50 montrant l'emplacement des pieds de positionnement 20 de l'amorce du film et de la butée d'emprisonnement 55 ; en outre, on peut voir que l'élément de guidage 19 du film comprend deux guides latéraux 19a et 19b dans lesquels défile la bande de film non représentée, de plus, sur cette figure, on peut voir que les guides 52a et 52b du chargeur sont traversés par un arbre de transmission 56 muni d'un pignon denté 57.

La figure 8c représente les détails de réalisation des pieds de positionnement 20 de l'amorce du film situés dans l'élément de positionnement 19 représenté sur la figure 8b. Ces pieds de positionnement mobiles peuvent occuper deux positions stables : une première position, comme représenté, correspondant au blocage de l'amorce 4 du film et une seconde portion correspondant à une position de libération de l'amorce du film. A cet effet, ces pieds de positionnement comportent deux gorges circulaires 20a et 20b dans lesquelles peuvent s'engager des butées élastiques à billes 20c ; chacun des pieds de positionnement 20 débouche dans un dégagement 19c, destiné à recevoir les pions mobiles 34 (Fig. 7) permettant de soulever ces pieds dans le but de libérer l'amorce du film 4.

La figure 8d représente une vue en coupe latérale du chargeur de film 50, montrant la position de la bobine dévideuse 2 à l'intérieur du boîtier 51 et la position relative des deux galets de guidage, respectivement 18a et 18b.

La figure 8e représente une vue en coupe transversale du chargeur de film 50. Le boîtier 51 du chargeur de film, de forme sensiblement parallélépipédique ou cylindrique comporte deux faces latérales 51a et 51b dont au moins une d'entre elles est amovible pour permettre le chargement de la bobine dévideuse 2. Cette bobine dévideuse comprend une paire de flasques 2a et 2b solidaires d'un mandrin 16 qui est guidé en rotation par deux roulements à billes respectivement 56a et 56b et comporte, à l'une de ses extrémités, un pignon claveté 57 destiné à être couplé à un moyen de mise en rotation de cette bobine dévideuse.

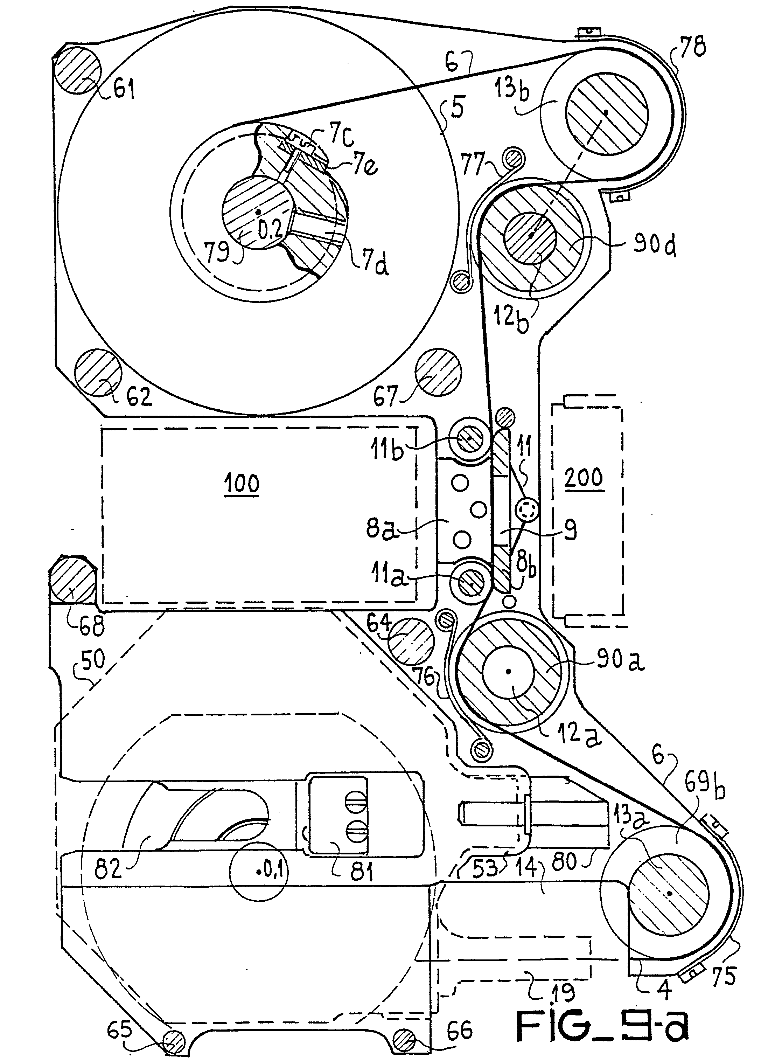

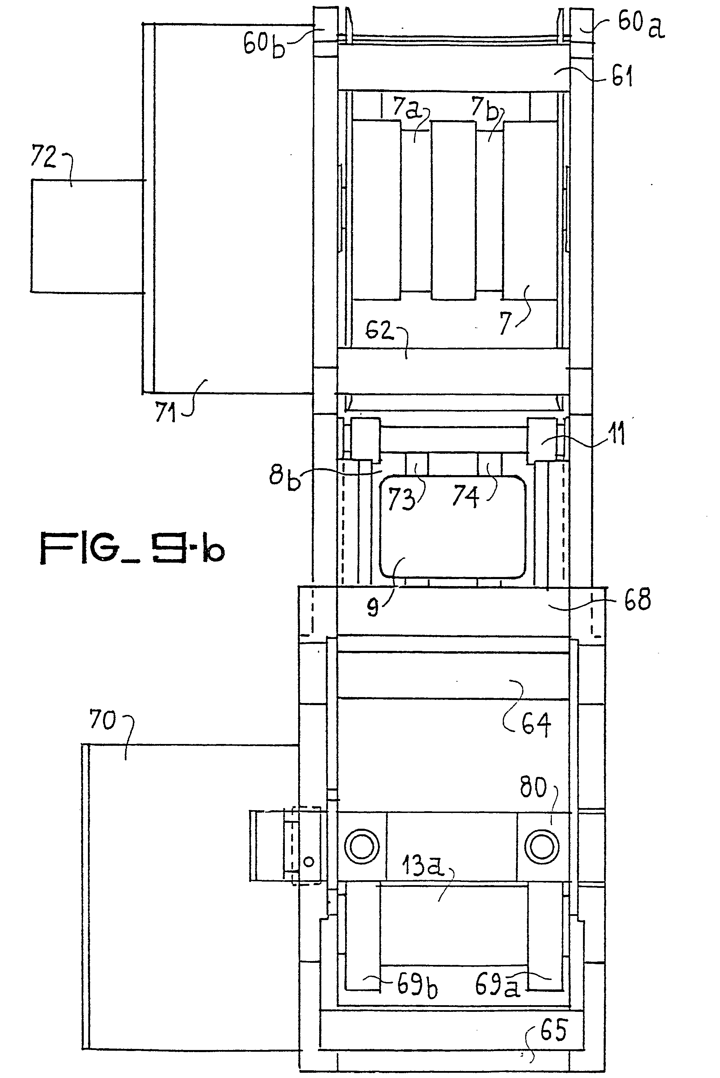

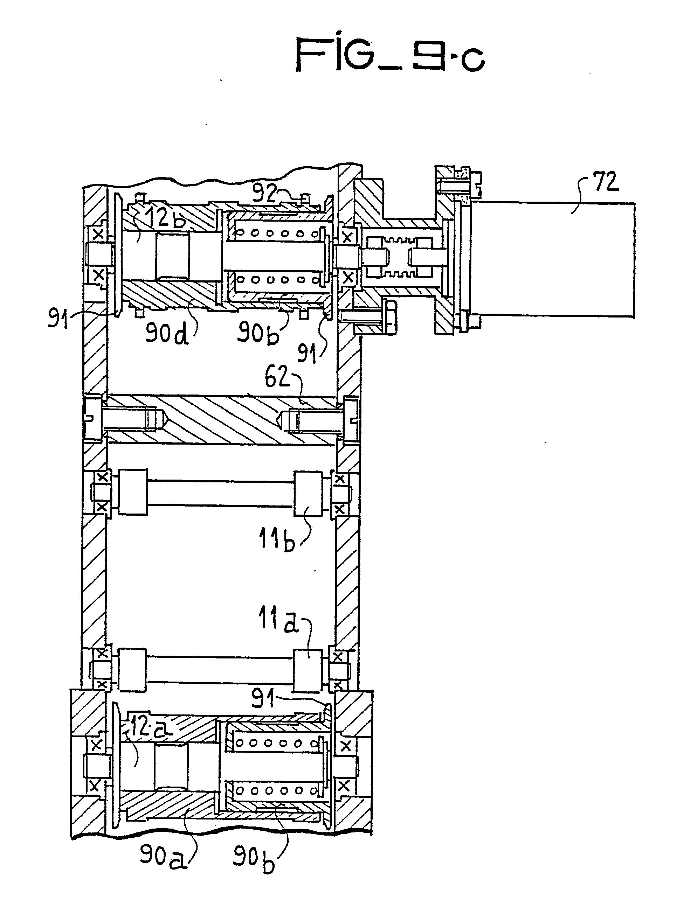

Les figures 9a et 9b représentent, respectivement, selon une coupe latérale et une vue transversale arrière, une forme de réalisation du lecteur de bande équipé de son chargeur de film. Le lecteur de bande comprend un bâti constitué, à titre indicatif, de deux flasques 60a et 60b distants, solidarisés par un jeu d'entretoises, telles que les entretoises 61 à 67. Ce bâti est positionné par rapport à l'élément lumineux 100 fournissant un pinceau lumineux d'analyse de l'image enregistrée sur le film, le faisceau de lumière traversant le film est analysé par un élément 200, ces deux éléments étant connus en soi et ne faisant pas partie de l'invention ne seront pas décrits. Le bâti supporte, en outre, un premier organe moteur 70 solidaire de la bobine dévideuse, un second organe moteur 71 solidaire de la bobine réceptrice 5 et un transducteur de position angulaire 72 qui fournit un signal de mesure de la position de la bande dans la fenêtre d'analyse 9 de presse-film 8b.

Sur la figure 9b, on voit que l'élément presse-film 8b comporte deux gorges 73 et 74 autorisant le libre passage des boutons 21 de l'amorce du film et de l'extrémité libre de la bretelle d'entraînement 6. De même, le mandrin 7 de la bobine réceptrice comporte deux gorges 7a et 7b destinées au logement de ces moyens d'accouplement 21 ; de plus, la bretelle d'entraînement 6 comporte, à cet effet, des perforations 24c (Fig. 4) judicieusement espacées permettant aux boutons 21 de traverser librement cette bretelle lors de l'enroulement afin de se loger dans ces gorges 7a et 7b. La distance des perforations 24c aux boutonnières 24 correspond à un tour d'enroulement. Le nombre d'arrangement de trous 24a est déterminé pour absorber l'épaisseur radiale présente par les boutons 21. Les rouleaux tels que 13a et 13b peuvent être constitués par une pièce cylindrique fixe, équipée d'un jeu de roulement à billes 69a et 69b.

Sur la figure 9a on a représenté des pièces de guidage 75 à 78 disposées en regard des rouleaux 12a et b et 13a et b, ces pièces de guidage ont pour fonction d'éviter à la bande d'échapper des rouleaux, notamment lorsque les organes moteurs 70 et 71 ne sont pas en service. Le mandrin 7 de la bobine réceptrice 2 comporte un moyen de fixation de la bretelle d'entraînement constitué, par exemple, par une plaquette 7e fixée par des vis 7c et ce mandrin est rendu solidaire de son arbre de rotation 79 par des vis 7d. Le bâti comprend, en outre, une butée 80 qui s'engage dans l'élément de guidage 53 du chargeur de bande 50, un détecteur 81 permettant de détecter l'enfichage de ce chargeur et une glissière 82 destinée à recevoir les guides 52 du chargeur.

La figure 9c représente, selon une vue en coupe, une forme de réalisation des rouleaux de guidage 12a et 12b. Les positions longitudinales et transversales du film doivent être déterminées avec précision. La tolérance sur la largeur du film ne permet pas de positionner latéralement le film entre deux guides fixes. Dans cette forme de réalisation, les éléments de guidage sont portés sur les rouleaux 12a et 12b, chacun de ces rouleaux comprend deux éléments cylindriques 90a et 90b emboîtés concentriquement, de manière élastique, chacun de ces deux éléments est muni de joues 91.

Lorsque la bande comporte des perforations latérales, l'un des rouleaux de guidage est muni de dents 92 dont l'épaisseur transversale est sensiblement inférieure à la largeur des perforations latérales du film et dont l'épaisseur radiale est égale à la longueur des perforations latérales du film. Le transducteur de position angulaire 72 est couplé mécaniquement à l'arbre et fournit un signal électrique représentatif de la position de la partie de la bande engagée dans le couloir de lecture de l'appareil. Afin de connaître sans ambiguïté la position du film, les cycles successifs du signal de sortie du transducteur 72 peuvent être comptés.

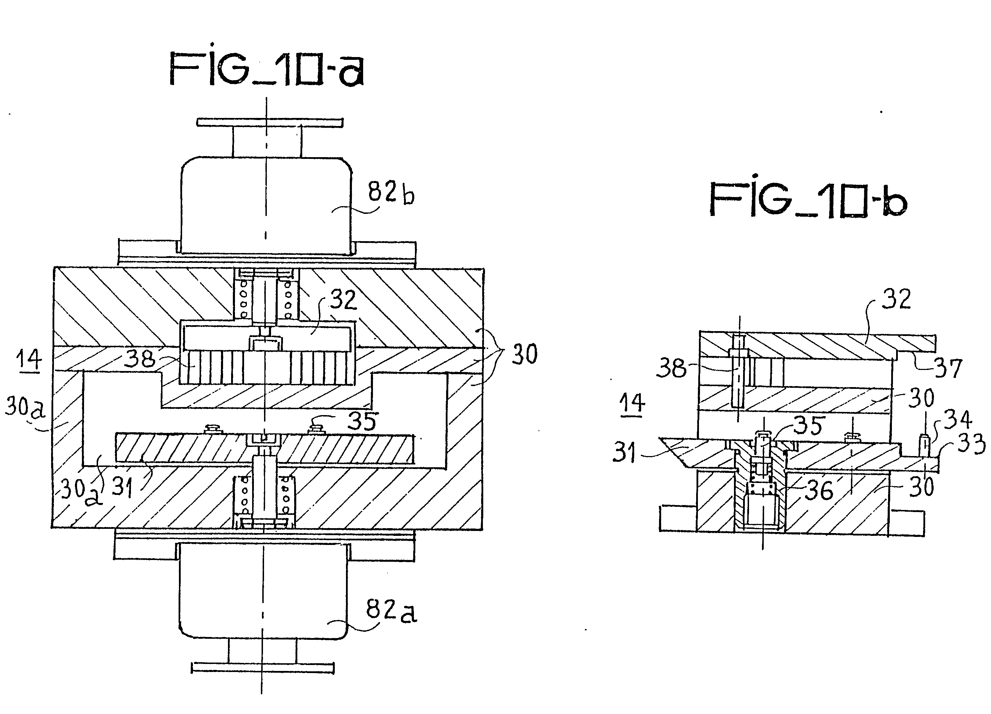

La figure 10a représente, selon une vue en coupe transversale, une forme de réalisation de l'organe mécanique d'accouplement 14 permettant d'enficher les boutons situés sur l'amorce de la bande dans les boutonnières correspondantes disposées sur l'extrémité libre de la bretelle d'entraînement de la bande. Cet organe mécanique 14 comprend le plateau fixe 30 solidaire du bâti de l'appareil de lecture ; cet élément fixe comporte un logement intérieur 30a, en forme de U, destiné à assurer le libre passage du moyen de positionnement 19 de l'amorce 4 de la bande. A l'intérieur de ce logement 30a, est disposé le premier plateau mobile 31 muni de boutons rétractables 35 qui fournissent le moyen d'accrochage de l'extrémité libre de la bretelle d'entraînement de la bande. Le second plateau mobile 32 est disposé à l'extérieur de l'élément fixe 30 et, en regard du premier plateau mobile, ce second plateau mobile est muni d'un jeu de doigts 38, destiné à désolidariser l'amorce de la bande et l'extrémité libre de la bretelle d'entraînement de cette bande. Les mouvements des plateaux mobiles sont assurés respectivement par des organes moteurs 82a et 82b qui peuvent être, par exemple, des électro-aimants classiques commandés par des boutons-poussoirs non représentés.

La figure 10b représente, selon une vue latérale partielle, l'organe d'accouplement mécanique 14 de la figure 10a. Sur cette figure 10b, on voit que le premier plateau mobile 31 comporte le dégagement 33 sur lequel sont disposés les pions 34 destinés à repousser les pieds de positionnement 20 de l'amorce 4 de la bande. De même, le second plateau mobile 32 comporte le dégagement 37 symétrique du dégagement 33, destiné à engager les pieds de positionnement 20 de l'amorce 4 de la bande.

On voit maintenant plus clairement les avantages fournis par la présente invention. La largeur de la bande peut être relativement importante, cette bande peut être relativement mince et souple puisque l'opération d'insertion de l'amorce de la bande à travers les rouleaux de guidage et le couloir de lecture est éliminé. Le chargeur de bande est du type monobobine, donc de dimensions réduites et son chargement dans l'appareil de lecture est extrêmement simple et commode à effectuer ; l'accouplement de l'amorce de la bande sur la bobine réceptrice peut être totalement automatique. De plus, le dispositif dérouleur peut être réalisé sous une forme compacte et particulièrement robuste permettant sa mise en œuvre dans des appareils destinés à des véhicules soumis à des chocs et des vibrations de niveau important. La position de la bande dans le couloir de lecture peut être connue avec précision.

L'invention n'est pas limitée aux modes de réalisation qui viennent d'être décrits, notamment les positions relatives et la forme des divers éléments peuvent être adaptées aux applications envisagées à la nature de la bande à analyser. Dans les applications aux lecteurs-enregistreurs de bandes magnétiques, les têtes de lecture-écriture peuvent être rétractables et s'effacer partiellement pour laisser le libre passage des moyens d'accouplement de la bretelle d'entraînement à l'amorce de la bande. L'indexation de la bande peut être différente et notamment être réalisée par des moyens électroniques ou optroniques.

Un dérouleur de bande, selon l'invention, trouve son application dans les appareils de lecture et/ou d'enregistrement sur bande de données analogiques ou numériques. La bande à dérouler peut être de nature diverse : film plastique, ruban en papier ou encore ruban métallique ou métallisé.

## Revendications

1. Dérouleur de bande comportant une bobine dévideuse (2) sur laquelle est enroulée une bande (3) munie d'une amorce (4), et une bobine réceptrice (5) destinée à recevoir cette bande et équipée d'une bretelle (6) d'entraînement de cette bande, des moyens d'accouplements étant prévus pour disposer l'extrémité libre de cette bretelle en regard de l'amorce de la bande et les solidariser lors d'un accouplement et l'inverse pour un désaccouplement, ces deux parties en regard étant munies d'éléments d'accouplement de l'amorce (4) de la bande avec l'extrémité libre de la bretelle (6) comportent un jeu de boutons (21) enfichables dans un jeu de boutonnières (24) correspondant et un dispositif mécanique (14) destiné à enficher le jeu de boutons (21) dans le jeu de boutonnières, ainsi qu'à produire l'opération inverse lors d'un désaccouplement.

2. Dérouleur selon la revendication 1, caractérisé en ce que la bretelle (6) d'entraînement de la bande est un ruban métallique.

3. Dérouleur selon la revendication 1, caractérisé en ce que le jeu de boutons est disposé sur l'amorce (4) de la bande et le jeu de boutonnières est disposé sur l'extrémité libre de la bretelle (6) d'entraînement de la bande, ledit dispositif mécanique (14) comprend un élément de positionnement et de guidage (19) de l'amorce de la bande et, disposé en regard de cet élément de positionnement, un plateau mobile (31) pour produire l'enfichage des boutons dans le jeu de boutonnières disposé sur l'extrémité de la partie libre de la bretelle d'entraînement.

4. Dérouleur selon la revendication 3, caractérisé en ce que l'élément de positionnement (19) comprend des pieds (20) de positionnement rétractables destinés à s'engager transversalement dans des perforations (20a) situées sur l'amorce (4) de la bande.

5. Dérouleur selon la revendication 3 ou 4, caractérisé en ce que le moyen de désaccouplement comporte un deuxième plateau mobile doté d'un ensemble de doigts mobiles (38) et en ce que l'amorce (4) de la bande comporte des perforations (23) destinées à assurer le libre passage de ces doigts mobiles.

6. Dérouleur selon la revendication 5, caractérisé en ce que les perforations (23) destinées au passage des doigts mobiles sont disposées régulièrement et respectivement autour des boutons (21) disposés sur l'amorce du film.

7. Dérouleur selon l'une quelconque des revendications 1 à 6, caractérisé en ce que des perforations complémentaires (24c) sont prévues sur la bretelle pour recevoir les boutons (21) lors de l'enroulement.

8. Lecteur de bande comprenant un bâti sur lequel sont montés un chargeur de bande (50), une bobine réceptrice (5), deux rouleaux de guidage (12a, 12b) de la bande, situés de part et d'autre d'un presse-film muni d'une fenêtre de lecture (9), caractérisé en ce qu'il comprend une bretelle (6) d'entraînement de la bande placée sur les rouleaux de guidage, cette bretelle ayant une première extrémité solidaire de la bobine réceptrice et une seconde extrémité munie de boutonnières, et en ce que le chargeur de film comprend une bobine dévideuse placée à l'intérieur d'un boîtier encliquetable (51) incluant un moyen (19) de positionnement de l'amorce de la bande ; cette amorce étant munie d'un jeu de boutons (21) enfichables dans des boutonnières (24) disposées sur la seconde extrémité de la bretelle d'entraînement de la bande et en ce qu'il comprend un organe mécanique (14) permettant d'accoupler et de désaccoupler l'amorce de la bande et la seconde extrémité de la bretelle.

9. Lecteur de bande selon la revendication 8, caractérisé en ce que le moyen de positionnement de l'amorce de bande, situé sur le chargeur de bande comporte un jeu de pieds (20) de positionnement rétractables et en ce que l'amorce de la bande est munie de perforations (20a) correspondantes.

10. Lecteur de bande selon la revendication 8 ou 9, caractérisé en ce qu'il comprend un organe d'accouplement comportant deux plateaux mobiles liés au bâti de ce lecteur et situés de part et d'autre du moyen de positionnement de l'amorce de la bande, l'un de ces plateaux étant muni d'un jeu de boutons rétractables (35) et l'autre étant muni d'un ensemble de doigts (38).

11. Lecteur de bande selon la revendication 8, caractérisé en ce que les rouleaux de guidage (12a, 12b) comprennent deux éléments cylindriques coaxiaux (90a, 90b) emboîtés élastiquement.

12. Lecteur de bande selon l'une quelconque des revendications 8 à 11 et dans lequel la bande comporte des perforations latérales (22), caractérisé en ce que l'un de ces rouleaux de guidage est muni de dents (92) destinées à s'engager dans ces perforations latérales et en ce que ce rouleau est physiquement couplé à un transducteur de position angulaire (72).

## Claims

1. Tape unwinder comprising an unwinding reel (2) whereupon a tape (3) provided with a starting section (4) is wound and a take-up reel (5) for receiving this tape an equipped with a strap (6) for driving this tape, coupling means being provided for placing the free end of this strap in facing relationship to the starting section of the tape and to engage them with each other in a coupling operation and vice versa for a decoupling operation, the two facing members being provided with mutual coupling elements, characterized in that the coupling elements of the starting section (4) of the tape for the coupling with the free end of the strap (6) comprise a set of buttons (21) susceptible to be inserted into a set of corresponding buttonholes (24) and a mechanical device (14) for inserting the set of buttons (21) into the set of buttonholes and for producing the inverted operation for decoupling.

2. Unwinder according to claim 1, characterized in that the tape driving strap (6) is a metallic tape.

3. Unwinder according to claim 1, characterized in that the set of buttons is arranged on the starting section (4) of the tape and the set of buttonholes is arranged on the free end of the tape driving strap (6), said mechanical device (14) comprising a member (19) for the positioning and guiding of the tape starting section and, arranged in facing relationship to this positioning member, a moveable platen (31) for producing the insertion of the buttons into the set of buttonholes disposed at the end of the free portion of the driving strap.

4. Unwinder according to claim 3, characterized in that the positioning member (19) comprises retractable positioning feet (20) susceptible to transversely engage into perforations (20a) located on the starting section (4) of the tape.

5. Unwinder according to claims 3 or 4, characterized in that the decoupling means comprise a second moveable platen provided with a set of moveable fingers (38) and in that the starting section (4) of the tape comprises perforations (23) for permitting the free passage of these moveable fingers.

6. Unwinder according to claim 5, characterized in that the perforations (23) for the passage of the moveable fingers are regularly and respectively arranged about the butons (21) arranged on the starting section of the film.

7. Unwinder according to any of claims 1 to 6, characterized in that complementary perforations (24c) are provided on the strap for receiving the buttons (21) upon the winding.

8. Tape reader comprising a stand whereto a tape loader (50), a take-up reel (5) and two tape guiding rollers (12a, 12b) are mounted which lie on both sides of a film applying member provided with a reading window (9), characterized in that it comprises a tape driving strap (6) placed on the guiding rollers, this strap having a first end joining the take-up reel and a second end provided with button holes, and in that the film loader comprises an unwinding reel located inside of a housing (51) which may be secured by snapping engagement and includes means (19) for the positioning of the starting section of the tape ; this starting section being provided with a set of buttons (21) which are insertable into buttonholes (24) arranged on the second end of the tape driving strap, and in that it comprises a mechanical member (14) permitting to couple with and to decouple the starting section of the tape from the second end of the strap.

9. Tape reader according to claim 8, characterized in that the means for the positoning of the starting section of the tape located on the tape loader comprises a set of retractable positioning feet (20), and in that the starting section of the tape is provided with corresponding perforations (20a).

10. Tape reader according to claims 8 or 9, characterized in that it comprises a coupling member comprising two moveable platens connected to the stand of this reader and lying on both sides of the means for the positioning of the starting section of the tape, on of these platens being provided with a set of retractable buttons (35) and the other being provided with a set of fingers (38).

11. Tape reader according to claim 8, characterized in that the guiding rollers (12a, 12b) comprise two coaxial cylindrical members (90a, 90b) resiliently inserted into each other.

12. Tape reader according to any of claims 8 to 11 wherein the tape comprises lateral perforations (22), characterized in that one of the guiding rollers is provided with teeth (92) for engaging into the lateral perforations, and in that this roller is physically coupled to an angular position transducer (72).

**Patentansprüche**

1. Bandabspulgerät mit einer Abwickelspule (2), auf welcher ein mit einem Anlaufteil (4) versehenes Band (3) aufgewickelt ist, und einer Aufwickelspule (5), die zur Aufnahme dieses Bandes bestimmt ist und mit einem Antriebsriemen (6) für dieses Band versehen ist, wobei Ankopplungsmittel vorgesehen sind, um das freie Ende dieses Riemens in Gegenüberstellung zu dem Anlaufteil des Bandes zu bringen und sie während einer Ankopplung fest miteinander zu verbinden, und umgekehrt zum Entkoppeln, wobei diese zwei einander gegenseitig befindlichen Teile mit Elementen zur gegenseitigen Kopplung versehen sind, dadurch gekennzeichnet, daß die Ankoppelelemente des Anlaufteils (4) des Bandes zur Ankopplung an das freie Ende des Riemens (6) eine Gruppe von Knöpfen (21) umfassen, die in eine Gruppe von entsprechenden Knopflöchern (24) einsteckbar sind, und eine mechanische Vorrichtung (14) umfassen, die dazu bestimmt ist, die Gruppe von Knöpfen (21) in die Gruppe von Knopflöchern einzustecken und bei einer Entkopplung den umgekehrten Vorgang auszuführen.

2. Abspulgerät nach Anspruch 1, dadurch gekennzeichnet, daß der Antriebsriemen (6) für das Band ein Metallband ist.

3. Abspulgerät nach Anspruch 1, dadurch gekennzeichnet, daß die Gruppe von Knöpfen an dem Anlaufteil (4) des Bandes angebracht ist und die Gruppe von Knopflöchern an dem freien Ende des Antriebsriemens (6) für das Band angeordnet ist, wobei die mechanische Vorrichtung (14) ein Positionier- und Führelement (19) für den Anlaufteil des Bandes und gegenüber diesem Positionierelement angeordnet eine bewegliche Platte (31) umfaßt, um das Einstecken der Knöpfe in die Gruppe von Knopflöchern herbeizuführen, welche an dem Ende des freien Teils des Antriebsriemens angeordnet ist.

4. Abspulgerät nach Anspruch 3, dadurch gekennzeichnet, daß das Positionierelement (19) einziehbare Positionier-Fußteile (20) umfaßt, die dazu bestimmt sind, transversal in Perforationen (20a) einzugreifen, welche an dem Anlaufteil (4) des Bandes liegen.

5. Abspulgerät nach Anspruch 3 oder 4, dadurch gekennzeichnet, daß die Entkopplungsmittel eine zweite bewegliche Platte umfassen, die mit einer Gruppe von beweglichen Fingern (38) ausgestattet ist, und daß der Anlaufteil (4) des Bandes Perforationen (23) umfaßt, die dazu bestimmt sind, den freien Durchgang dieser beweglichen Finger zu gewährleisten.

6. Abspulgerät nach Anpruch 5, dadurch gekennzeichnet, daß die Perforationen (23), die für den Durchgang der beweglichen Finger bestimmt sind, regelmäßig und jeweils um die am Anlaufteil des Films angeordneten Knöpfe (21) herum angeordnet sind.

7. Abspulgerät nach einem der Ansprüche 1 bis 6, dadurch gekennzeichnet, daß komplementäre Perforationen (24c) an dem Riemen vorgesehen sind, und die Knöpfe (21) beim Aufwickeln aufzunehmen.

8. Bandlesegerät mit einem Gestell, an welchem ein Bandladeteil (50), eine Aufnahmespule (5) und zwei Bandführungsrollen (12a, 12b) angebracht sind, welche sich auf der einen bzw. anderen Seite eines mit einem Lesefenster (9) versehenen Filmandrückers befinden, dadurch gekennzeichnet, daß es einen Bandantriebsriemen (6) umfaßt, welcher über die Führungsrollen gezogen ist und ein erstes, mit der Aufnahmespule fest verbundenes Ende sowie ein zweites, mit Knopflöchern versehenes Ende aufweist, und daß der Bandladeteil eine Abwickelspule umfaßt, die im Inneren eines einschnappbaren Gehäuses (51) angeordnet ist, welches Positioniermittel (19) für den Bandanlaufteil umfaßt, wobei dieser Anlaufteil mit einer Gruppe von Knöpfen (21) versehen ist, welche in Knopflöcher (24) einsteckbar sind, die an dem zweiten Ende des Bandantriebsriemens angeordnet sind, und daß es ein mechanisches Organ (14) umfaßt, welches es gestattet, den Bandanlaufteil und das zweite Ende des Riemens zu koppeln und zu entkoppeln.

9. Bandlesegerät nach Anspruch 8, dadurch gekennzeichnet, daß die Positioniermittel für den Bandanlauteil, welche an dem Bandladeteil angebracht sind, eine Gruppe von einziehbaren Positionier-Fußteilen (20) umfassen und daß der Bandanlaufteil mit entsprechenden Perforationen (20a) versehen ist.

10. Bandlesegerät nach Anspruch 8 oder 9, dadurch gekennzeichnet, daß es ein Ankoppelorgan umfaßt, welches zwei bewegliche Platten umfaßt, die mit dem Gestell dieses Lesegerätes verbunden sind und sich auf der einen bzw. anderen Seite der Positioniermittel für den Bandanlaufteil befinden, wobei die eine dieser Platten mit einer Gruppe von einziehbaren Knöpfen (35) und die andere mit einer Gruppe von Fingern (38) versehen ist.

11. Bandlesegerät nach Anspruch 8, dadurch gekennzeichnet, daß die Führungsrollen (12a, 12b) zwei koaxiale zylindrische Elemente (90a, 90b) umfassen, die elastisch ineinander gesteckt sind.

12. Bandlesegerät nach einem der Ansprüche 8 bis 11, bei welchem das Band seitliche Perforationen (22) aufweist, dadurch gekennzeichnet, daß eine dieser Führungsrollen mit Zähnen (92) versehen sind, welche dazu bestimmt sind, in diese seitlichen Perforationen einzugreifen, und daß diese Rolle körperlich an einen Winkelstellungsmelder (72) angekoppelt ist.

# FIG_1

## FIG_2-a

## FIG_2-b

# FIG_3

22
4
20a
23
21

# FIG_4

6
22
6a
24c
*24*
+

# FIG_5

21
21a
21c
4
21b

# FIG_6

6
24b
24a
24

# FIG_7

38
32
F4
20
37
19
30
4
21
35
23
24
6
33
34
36
F3
31

# FÍG_8·a

# FIG_ 8-b

# FIG_ 8-c

50

52b

51

52a

19b

20

53

55

53

20

19a

54

56

57

0.1

4

20c

20

19c

20b

20a

20

19c

20

19

0 074 901

## FIG_8-d

## FIG_8-e

coupe EE

FIG_9-a

FIG_9·b

0 074 901

# FIG_9·c

FIG_10-a

FIG_10-b